# EUROPÄISCHE PATENTSCHRIFT

(11) **EP 3 111 148 B1**
(45) Veröffentlichungstag und Bekanntmachung des Hinweises auf die Patenterteilung: **28.03.2018**
(21) Anmeldenummer: 15715125.9
(22) Anmeldetag: 26.02.2015
(51) Int. Cl.: F26B 21/04, F26B 21/06, F26B 23/00

(54) **VERFAHREN ZUR TROCKNUNG VON SCHÜTTGUT**
METHOD FOR DRYING BULK MATERIAL
PROCÉDÉ POUR LE SÉCHAGE DE MATÉRIAU EN VRAC

(30) Priorität: 26.02.2014 AT 501422014
(43) Veröffentlichungstag der Anmeldung: 04.01.2017
(73) Patentinhaber: Mühlböck, Kurt, 4906 Eberschwang (AT)
(72) Erfinder: Mühlböck, Kurt, 4906 Eberschwang (AT)
(74) Vertreter: Burger, Hannes
(86) Internationale Anmeldenummer: PCT/AT2015/050053
(87) Internationale Veröffentlichungsnummer: WO 2015/127490

(56) Entgegenhaltungen:
- WO-A1-2012/075518
- US-A- 2 722 752
- US-A1- 2006 168 842

## Beschreibung

Die Erfindung betrifft ein Verfahren zur Trocknung von Schüttgut, insbesondere zur Trocknung von rieselfähigem Holz in Form von Sägespänen oder Hackgut bzw. von Klär- und Gärrückständen, bei welchem das Schüttgut nacheinander durch zumindest eine Vortrocknungskammer und zumindest eine Nachtrocknungskammer geführt wird, und den Kammern wenigstens eine Ventilationsvorrichtung zugeordnet ist, wobei ein Luftstrom zur Trocknung in der zumindest einen Nachtrocknungskammer eine im Kreislauf über ein Heizregister geführte Umluft umfasst, aus welcher Umluft ein Teilluftstrom abgezweigt und durch einen Wärmetauscher geführt wird, und wobei ein Luftstrom zur Trocknung in der zumindest einer Vortrocknungskammer aus einer über diesen Wärmetauscher angesaugten und optional über ein Heizregister zusätzlich erwärmten Frischluft gebildet wird.

Aus der WO 2012/075518 A1, welche auf den Anmelder zurückgeht, ist ein gattungsähnliches Verfahren bekannt, welches eine Trocknung von Holz mittels Luft vorsieht, bei welchem eine zur Trocknung des Holzes verwendete Frischluft in einem Luft/Luft-Wärmetauscher durch eine an die unmittelbare Umgebung abgeführte Abluft vorgewärmt werden kann. Die hierbei getroffenen Maßnahmen sind jedoch hinsichtlich der erzielbaren Energieeffizienz bzw. Nutzung der in dieser Abluft enthaltenen, latenten Wärmeenergie nur bedingt zufriedenstellend.

Der Erfindung liegt die Aufgabe zugrunde, ein Verfahren zur Trocknung von Schüttgut bereitzustellen, welches hinsichtlich der Energieeffizienz verbessert ist, und durch welches Verfahren außerdem eine erhöhte Belastung der Umgebungsluft vermieden wird bzw. eine Verunreinigung der Anlagenperipherie möglichst hintan gehalten wird.

Diese Aufgabe wird dadurch gelöst, dass der aus der Umluft um zumindest eine Nachtrocknungskammer abgezweigte Teilluftstrom nach der Hindurchführung durch den Wärmetauscher und einer durch Kondensation im Wärmetauscher bewirkten Reduzierung der in diesem Teilluftstrom enthaltenen Wassermenge, zur Gänze wieder in den Umluftstrom der wenigstens einen Nachtrocknungskammer zurückgeführt wird.

Durch diese Maßnahme wird einerseits erreicht, dass nicht nur eine zwischen dem Teilluftstrom und der Frischluft vorhandene Temperaturdifferenz, aufgrund von Wärmeübertragung ausgehend vom Teilluftstrom zur Frischluft, zum Vorwärmen der Frischluft verwendet bzw. genutzt wird, sondern auch die in dem warmen Teilluftstrom in Form von Wasser inhärent enthaltene Wärmeenergie. Dieses Wasser wurde dabei beim Durchtritt des Luftstroms zur Trocknung des Schüttguts dem Schüttgut entzogen. Diese Wärmeenergie wird bei dem gattungsgemäßen Verfahren zur Schüttguttrocknung zu einem hohen Anteil genutzt, um die angesaugte Frischluft für eine Vortrocknungskammer zu erwärmen bzw. vorzuwärmen und damit die Trocknungseffizienz für eine Vortrocknungskammer zu steigern.

In synergetischer Art und Weise wird andererseits bewerkstelligt, dass dem Teilluftstrom im Wärmetauscher eine hohe Menge an Wasser entzogen wird, wodurch die Wasseraufnahmekapazität dieses Teilluftstroms verbessert wird. Durch die Rückführung des derart entwässerten Teilluftstromes in den Umluftstrom um eine Nachtrocknungskammer kann daher auch das Trocknungsvermögen bzw. die Wasseraufnahmekapazität des Trocknungsluftstroms für eine Nachtrocknungskammer deutlich gesteigert werden. Zusätzlich kann durch die beschriebene Verfahrensführung die im Teilluftstrom enthaltene, wertvolle Heiz- bzw. Wärmeenergie nahezu vollständig im Verfahren erhalten und genutzt werden, also zur Trocknung des Schüttguts bzw. Holzes verwendet werden.

Ein weiterer, besonderer Vorteil der Rückführung bzw. Wiedereinspeisung des Teilluftstromes in den Umluftstrom ist die völlige Vermeidung einer Belastung bzw. Verschmutzung der Umwelt bzw. unmittelbaren Umgebung durch im Teilluftstrom enthaltene feste, flüssige bzw. gasförmige Schüttgut- bzw. Holzbestandteile oder Staubpartikel. Zudem kann dadurch das Auftreten einer sogenannten Dampfschwade reduziert bzw. vermieden werden. Dieser Vorteil kommt insbesondere bei der Trocknung von Holz-Schüttgut mit einem erhöhten Anteil von verhältnismäßig kleinen Bestandteilen zum Tragen. Beim Durchtritt des Schüttgutes durch eine Nachtrocknungskammer ist das Schüttgut bereits mittels zumindest einer Vortrocknungskammer zumindest teilweise entwässert bzw. bereits vorgetrocknet, sodass die gegenseitige Anhaftung der Stäube bzw. der Bestandteile des Schüttguts, welche durch enthaltenes Wasser hervorgerufen wird, bereits stark verringert ist. Somit ist die Tendenz, dass vor allem staubförmige Partikel aus dem Schüttgut durch den Trocknungs-Luftstrom mitgerissen werden, in einer Nachtrocknungskammer im Vergleich zu einer Vortrocknungskammer deutlich höher. Nachdem der Trocknungs-Umluftstrom für die wenigstens eine Nachtrocknungskammer in sich geschlossen ist und daraus keine Abluft in die Umgebung abgeleitet wird, ist die Schmutzbelastung für die Umwelt sehr gering. Etwaige Stoffe, welche aus dem Schüttgut während des Trocknungsvorgangs in einer Nachtrocknungskammer herausgelöst werden können, treten dabei aus der Trocknungsanlage vorwiegend bzw. ausschließlich mit dem abzuführenden Kondenswasser des Wärmetauschers aus. Dieses Kondenswasser kann in einfacher Art und Weise, zum Beispiel mittels einer Kläranlage, relativ wirtschaftlich gereinigt bzw. geklärt werden.

Demgegenüber ist die Wahrscheinlichkeit relativ gering, dass staubförmige Holzpartikel im Zuge einer Hindurchführung durch eine Vortrocknungskammer vom Trocknungs-Luftstrom mitgerissen werden, nachdem das Schüttgut in einer Vortrocknungskammer im Verhältnis zu einer Nachtrocknungskammer insgesamt noch relativ feucht ist. Aus diesem Grund, und aufgrund des vergleichsweise geringen Temperaturniveaus eines Luftstroms nach dem Durchtritt durch wenigstens eine Vortrocknungskammer, ist dessen Ableitung an die Umgebung als Abluft unproblematisch.

Um eine möglichst gute Nutzung der im Teilluftstrom enthaltenen Wärmenergie zu erreichen, können der Teilluftstrom und der Frischluftstrom hinsichtlich ihrer Strömungsgeschwindigkeiten und hinsichtlich ihrer Temperaturen relativ zueinander beim Durchtritt durch den Wärmetauscher derart aufeinander abgestimmt werden, dass ein möglichst großer Teil der dem Teilluftstrom zugewandten Oberfläche des Wärmetauschers durch die Frischluft soweit abgekühlt wird, dass die Taupunkttemperatur für den Teilluftstrom unterschritten ist. Dadurch wird erreicht, dass zumindest an diesen Teilabschnitten der Oberfläche des Wärmetauschers in erhöhtem Ausmaß Wasser aus dem Teilluftstrom abgeschieden wird.

Durch die in den Ansprüchen 2 und 3 vorgeschlagenen Maßnahmen, sind einerseits in verfahrenstechnischer Hinsicht zweckmäßige Teilstrommengen eingestellt, sodass sowohl eine ausreichende Entwässerung des Teilluftstromes erreicht werden kann, als auch eine ausreichende Vorwärmung der Frischluft erfolgt. Andererseits kann so auch eine praktikable, bautechnisch möglichst einfache Umsetzung sichergestellt werden. Insbesondere können dadurch die Dimensionen und damit einhergehenden Kosten des einzusetzenden Wärmetauschers in einem günstigen Kosten- zu Nutzen-Verhältnis gehalten werden.

Die Merkmale gemäß Anspruch 4 bringen den Vorteil, dass dadurch eine effiziente und betriebszuverlässige Möglichkeit zum bedarfsorientierten Anheben der Strömungsgeschwindigkeit des Teilluftstromes geschaffen wird. Zudem kann dadurch gewährleistet werden, dass eine ausreichende Menge des Teilluftstromes zum Vorwärmen der Frischluft mittels dem Wärmetauscher zur Verfügung gestellt wird.

Durch die in Anspruch 5 angegebenen Merkmale kann die Steuerbarkeit der Strömungsgeschwindigkeiten aller Luftströme drastisch verbessert werden. Weiters kann dadurch auf Parameteränderungen des zu trocknenden Schüttguts bzw. Holzes oder der Trocknungsluftströme rasch reagiert werden. Außerdem kann dadurch erreicht werden, dass das jeweilige Trocknungsklima in einer Trocknungskammer mit erhöhter Präzision und Reaktionsgeschwindigkeit an Soll- bzw. Wunschzustände angepasst werden kann.

Die in Anspruch 6 angegebene Vorgangsweise stellt ein praktikables Mittel zum Ausgleichen von Unterschieden in der Qualität des zu trocknenden Schüttguts bereit.

Schwankungen betreffend die Anfangsfeuchte im angelieferten bzw. zu trocknenden Schüttgut können auch durch die Maßnahmen gemäß Anspruch 7 problemlos ausgeglichen werden.

Die in Anspruch 8 angegebenen Maßnahmen stellen eine hinsichtlich Energieeffizienz besonders zweckmäßige bzw. erfolgreiche Ausführungsvariante dar. Durch den angegebenen Verfahrensablauf kann das zu trocknende Schüttgut gezielt stufenweise bzw. zonenweise auf immer geringere Restfeuchte getrocknet werden. Insbesondere wird dadurch sichergestellt, dass jede Trocknungskammer mit der spezifischen, jeweils optimierten Luftmenge und/oder Lufttemperatur beaufschlagt werden kann. Außerdem können so in den ersten Vortrocknungsschritten des Verfahrens Luftströme mit relativ geringer Temperatur eingesetzt werden, was ein weiteres Vorwärmen mittels eines Heizregisters im Regelfall überflüssig macht. Da das Schüttgut erst in den letzten Nachtrocknungskammern einen relativ geringen Feuchtigkeitsgehalt erreicht, und aus einer Nachtrocknungskammer keine Abluft an die Umgebungsluft abgeführt wird, kann so auch vorteilhaft verhindert werden, dass die Umwelt durch Holzstaub oder dergleichen belastet wird.

Um eine möglichst gute Durchströmung des Schüttguts mit Trocknungsluft zu erreichen, ist die in Anspruch 9 angegebene Maßnahme geeignet. Insbesondere kann dadurch vermieden werden, dass ein durch eine Trocknungskammer strömender Trocknungs-Luftstrom das auf dem Förderband befindliche Schüttgut lediglich umströmt, und somit eigentlich nur die dem Luftstrom zugewandten Oberflächenbereiche des Schüttguts in ausreichendem Maß getrocknet werden. Demgegenüber wird durch die anspruchsgemäßen Maßnahmen erreicht, dass möglichst viele Teilbereiche des auf dem Förderband aufgebrachten Schüttgutes mit der Trocknungsluft in Kontakt kommen, sodass die erreichbare Effizienz der Trocknung des Schüttguts mittels eines Luftstroms drastisch gesteigert wird. Weiters wird so hintangehalten, dass eine große Menge der durch eine Trocknungskammer geführten Trocknungsluft nicht aktiv für den Trocknungsvorgang genutzt ist. Das heißt, dass die Menge an ungenutzter Energie verringert wird, und somit das Trocknungsverfahren für Schüttgut bzw. Holz hinsichtlich Energieeffizienz weiter gesteigert werden kann. Schließlich wird auch noch erreicht, dass das Schüttgut das gesamte Trocknungsverfahren relativ rasch durchlaufen kann, sodass kürzere Durchlaufzeiten bzw. höhere Durchsätze erzielbar sind.

Durch die Maßnahmen gemäß dem Wortlaut von Anspruch 10 wird eine bestmögliche Ausnutzung der gesamten Breite einer Trocknungskammer bereitgestellt, da ein in vertikaler Richtung durch eine Trocknungskammer strömender Luftstrom - bezogen auf die Auflagefläche des Förderbandes - an möglichst vielen Stellen mit dem zu trocknenden Schüttgut in Berührung kommt. Wiederum kann damit der Prozentsatz der aktiv am Trocknungsvorgang beteiligten Teilmengen des durch eine Trocknungskammer geführten Luftstroms erhöht werden.

Eine Verfahrensführung gemäß den Merkmalen des Anspruchs 11 ist eine weitere Möglichkeit, um die Effizienz der Schüttguttrocknung zu verbessern, da sowohl auf Schwankungen im Anfangsfeuchtegehalt des Schüttguts, als auch auf Schwankungen in der bereitgestellten Trocknungsenergie reagiert werden kann.

Die in Anspruch 12 angegebenen Maßnahmen gewährleisten eine ausreichende Trocknung für verschiedene Arten von Holz-Schüttgut. Insbesondere kann für eine kleinere Stück- bzw. Korngröße des Schüttguts, wie zum Beispiel Sägespäne, die Schüttguthöhe verringert, und für eine größere Stück- bzw. Korngröße, beispielsweise für Hackgut oder dergleichen, die Schüttguthöhe angehoben werden.

Der in Anspruch 13 beschriebene Verfahrensschritt minimiert das Risiko einer Verringerung der Energieeffizienz nach einem längerfristigen Betrieb, da so vermieden werden kann, dass beispielsweise eingebrachte Verunreinigungen den Ablauf des Trocknungsverfahrens allmählich negativ beeinflussen. Ein derartiger Verfahrensschritt ist besonders bei Verwendung eines luftdurchlässigen Förderbandes vorteilhaft, da dadurch die Gefahr, dass luftdurchlässige Abschnitte bzw. Durchström-Öffnungen des Förderbands verstopft bzw. verkleinert werden, stark verringert werden kann.

Insbesondere bei länger andauerndem Betrieb ist auch die Maßnahme gemäß Anspruch 14 zweckmäßig. Dadurch können etwa Holzreste oder Verschmutzungen vom Förderband entfernt werden, wodurch eine verbesserte Trocknungseffizienz und eine längerfristig gleichbleibende Trocknungsqualität bzw. Trocknungszuverlässigkeit erzielbar ist.

Schließlich sind auch die Maßnahme nach Anspruch 15 zweckmäßig, da dadurch die Entstehung von Schwaden aufgrund der geringen Austrittstemperatur hintan gehalten wird. Dadurch können optische Beeinträchtigungen bzw. Beeinträchtigungen von angrenzenden Straßenabschnitten, insbesondere im Hinblick auf Glatteisbildungen, vermieden werden.

Zum besseren Verständnis der Erfindung wird diese anhand der nachfolgenden Figuren näher erläutert.

Es zeigen jeweils in stark vereinfachter, schematischer Darstellung:
- Fig. 1: ein Blockschaltbild einer Ausführungsform des erfindungsgemäßen Verfahrens zur Trocknung von Schüttgut, insbesondere von Holz-Schüttgut;
- Fig. 2: einen schematischen Längsschnitt durch einen Wärmetauscher zur Wärmerückgewinnung bzw. Entwässerung von Luftströmen;
- Fig. 3: Teilabschnitte einer Vorrichtung zur Trocknung von Schüttgut in schematischem Längsschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

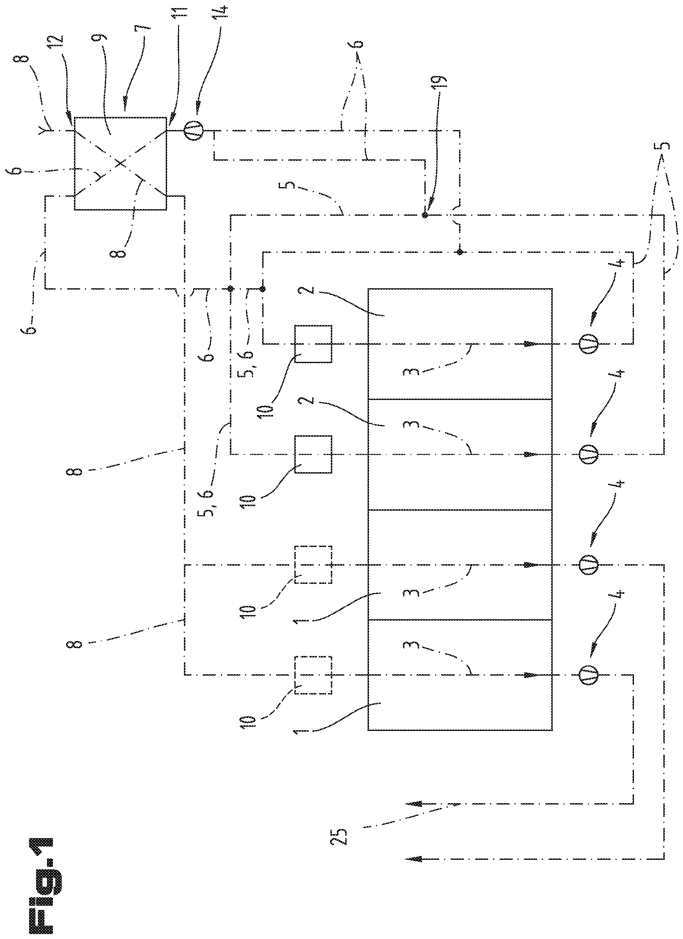

In Fig. 1 ist ein Verfahren zur Trocknung von Schüttgut, insbesondere von Holz in Schüttgutform, als Blockschaltbild schematisch dargestellt. Das zu trocknende Schüttgut wird dabei zunächst durch zumindest eine Vortrocknungskammer 1, und daran anschließend durch zumindest eine Nachtrocknungskammer 2 hindurchgeführt. Je nach Bedarf und Anlagengröße bzw. gewünschter Trocknungskapazität und Trocknungsleistung können selbstverständlich auch mehrere Vor- bzw. Nachtrocknungskammern 1, 2 unmittelbar aufeinanderfolgend angeordnet sein. Dies eröffnet grundsätzlich die Möglichkeit in jeder dieser Trocknungskammern 1, 2 ein für den Verfahrensablauf günstiges Trocknungsklima im Wesentlichen unabhängig voneinander einzustellen.

Der eigentliche Trocknungsvorgang für das Schüttgut in jeder Kammer 1, 2 erfolgt mittels eines Luftstroms 3, welcher durch die jeweilige Trocknungskammer 1, 2 geleitet wird. Hierfür sind den Trocknungskammern 1, 2 Ventilationsvorrichtungen 4 zugeordnet, welche unter anderem den jeweiligen Luftstrom 3 durch die entsprechende Kammer 1, 2 hindurchführen. Im in Fig. 1 gezeigten Ausführungsbeispiel weist jede der Trocknungskammern 1, 2 eine entsprechende Ventilationsvorrichtung 4 auf, wobei es grundsätzlich auch denkbar wäre, mehreren Trocknungskammern 1, 2 eine gemeinsame Ventilationsvorrichtung 4 zuzuordnen. Zur Verbesserung einer gezielten bzw. gesteuerten Einstellung des jeweiligen Klimas in den Trocknungskammern 1, 2 ist es jedoch vorteilhaft, jeder Trocknungskammer 1, 2 zumindest eine eigene Ventilationsvorrichtung 4 zuzuordnen.

Ein Luftstrom 3 durch eine Nachtrocknungskammer 2 wird dabei teilweise aus einer via die Ventilationsvorrichtung 4 in einem Luftkanal um die jeweilige Kammer 2 geführte Umluft 5 gebildet. Ein Teilstrom dieser um die Nachtrocknungskammer 2 geführten Umluft 5 wird als Teilluftstrom 6 abgezweigt und einem Wärmetauscher 7 zugeführt. Außerdem wird, wie dies aus Fig. 1 klar ersichtlich ist, Frischluft 8 über den Wärmetauscher 7 angesaugt, wobei der Teilluftstrom 6 und der Frischluftstrom 8 stofflich getrennt voneinander durch den Wärmetauscher 7 geleitet werden. Dies ermöglicht einerseits die Nutzung der im Teilluftstrom 6 enthaltenen Wärmeenergie, andererseits findet im Wärmetauscher 7 eine Entwässerung bzw. eine Reduzierung des Wassergehalts des Teilluftstromes 6 statt.

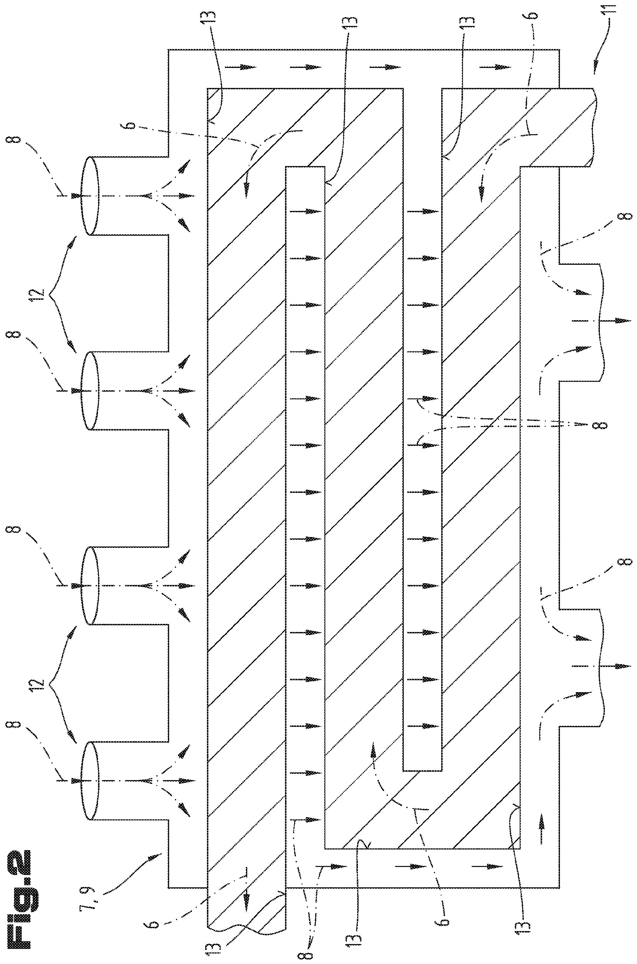

Der Wärmetauscher 7 wird bevorzugt durch einen sogenannten Kreuzstromwärmetauscher 9 gebildet, bei welchem der Teilluftstrom 6 und der Frischluftstrom 8 an den jeweiligen Eintrittsseiten 11, 12 in den Wärmetauscher 7 eintreten, und zumindest überwiegend in einem rechten Winkel zueinander durch den Wärmetauscher geführt werden, wie dies aus Fig. 2 ersichtlich ist. In Fig. 2 ist ein schematischer Längsschnitt durch einen solchen Wärmetauscher 7 gezeigt, wobei für gleiche Teile gleiche Bezugszeichen wie in der vorangegangenen Fig. 1 verwendet werden. Um unnötige Wiederholungen zu vermeiden, wird auf die Beschreibung in der vorangegangenen Fig. 1 hingewiesen bzw. Bezug genommen. An dieser Stelle wird angemerkt, dass die in Fig. 2 gezeigte bauliche Ausgestaltung eines Wärmetauschers 7 lediglich eine Ausführungsvariante desselben darstellt. Alternativ sind selbstverständlich andere, mehr oder weniger von dem in Fig. 2 gezeigten Ausführungsbeispiel abweichende Ausgestaltungsformen des Wärmetauschers 7 anwendbar.

Wie in Fig. 1 gezeigt ist, wird die durch Energieübertragung ausgehend vom Teilluftstrom 6 an den Frischluftstrom 8 im Wärmetauscher 7 vorgewärmte Frischluft 8 zur Vortrocknung des Schüttguts 15 in einer Vortrocknungskammer 1 herangezogen.

Der Luftstrom 3 durch einen Nachtrocknungskammer 2 besteht aus der um die Kammer 2 geführten Umluft 5 und dem aus der Umluft 5 abgezweigten, und anschließend durch den Wärmetauscher 7 geführten Teilluftstrom 6, welcher Teilluftstrom 6 nach der Hindurchführung durch den Wärmetauscher bzw. nach erfolgter Feuchtigkeitsreduzierung im Wärmetauscher 7 somit dem Umluftstrom 5 zur Gänze wieder zugeführt wird. Vor dem Eintritt in eine Nachtrocknungskammer 2 ist es erforderlich, diesen Luftstrom 3 zu erwärmen. Deshalb wird der Luftstrom 3 vor dem Eintritt in eine Nachtrocknungskammer 2 über ein Heizregister 10 geführt, welches mit Wärmeenergie gespeist werden kann.

Der Luftstrom 3 durch eine Vortrocknungskammer 1 wird, wie in Fig. 1 gezeigt, durch Frischluft 8 gebildet, welche via die Ventilationsvorrichtung 4 angesaugt und dabei durch die wenigstens eine Kammer geleitet wird. Vor dem Durchströmen der Vortrocknungskammer 1 wird die Frischluft 8 durch den Wärmetauscher 7 geleitet und dabei mittels des Teilluftstromes 6 erwärmt. Je nach Verfügbarkeit von ungenutzter Abwärme aus peripheren Anlagen, beispielsweise von Produktionsanlagen, und/oder zur Erreichung einer niedrigeren Rücklauftemperatur aus dem Heizregister 10 der wenigstens einen Nachtrocknungskammer 2, kann auch das Heizregister 10 vor der wenigstens einen Vortrocknungskammer 1 eingesetzt werden. Dadurch kann die Trocknungsleistung der wenigstens einen Vortrocknungskammer 1 gesteigert werden. Deshalb sind im in Fig. 1 gezeigten Ausführungsbeispiel für die Vortrocknungskammern 1 ebenfalls Heizregister 10 - strichliert dargestellt - vorgesehen, welche in Bezug auf die Strömungsrichtung der Frischluft 8 nach dem Wärmetauscher 7 und vor der Vortrocknungskammer 1 angeordnet sind. Allerdings ist es unter günstigen Verfahrensbedingungen, und aufgrund der Nutzung der in dem Teilluftstrom 6 enthaltenen Wärme- und Kondensationsenergie, meist nicht notwendig, die Frischluft 8 für eine Vortrocknungskammer 1 mittels eines Heizregisters 10 weiter zu erwärmen, bzw. kann auf solche Heizregister 10 gegebenenfalls gänzlich verzichtet werden.

Als Energiequelle zum Beheizen der Heizregister 10 kommt grundsätzlich jede bekannte Energiequelle in Frage. Besonders vorteilhaft ist es, wenn hierfür eine im Zuge eines extern ablaufenden Prozesses, beispielsweise eines Stromerzeugungsprozesses, anfallende Abwärme genutzt werden kann.

Durch die erfindungsgemäße Verfahrensführung wird ein besonders energieeffizienter Prozess erzielt, bei welchem zum Erwärmen der Frischluft 8 im Wärmetauscher 7 - zusätzlich zum Temperaturunterschied zwischen Frischluftstrom 8 und Teilluftstrom 6 - auch die inhärent im Teilluftstrom 6 enthaltene Kondensationsenergie genutzt wird, also im Wärmetauscher 7 eine möglichst große Menge von Wasser aus dem Teilluftstrom 6 abgeschieden wird, bevor der Teilluftstrom 6 wieder in den Umluftstrom 5 zurückgeführt wird. Vorteilhaft wird dadurch gleichzeitig auch die absolute Luftfeuchtigkeit des Teilluftstromes 6 reduziert, bevor der Teilluftstrom 6 dem Umluftstrom 5 zur Gänze wieder zugeführt wird. Das innerhalb des Wärmetauschers 7 aus dem Teilluftstrom 6 abgeschiedene Kondenswasser kann in bekannter Art und Weise aus dem Wärmetauscher 7 abgeleitet werden.

Es werden zumindest die Strömungsgeschwindigkeiten der beiden Luftströme 6, 8 durch den Wärmetauscher 7 derart aufeinander abgestimmt, dass zumindest Teilabschnitte einer dem Teilluftstrom 6 zugewandten Oberfläche 13 des Wärmetauschers 7, siehe Fig. 2, eine Temperatur aufweisen, welche unterhalb der Taupunkttemperatur des Teilluftstromes 6 liegt.

Dabei kann es sinnvoll sein, zumindest 10 % der Umluft 5 um eine Nachtrocknungskammer 2 als Teilluftstrom 6 abzuzweigen, und durch den Wärmetauscher 7 hindurchzuführen. Nach der teilweisen Entwässerung im Wärmetauscher 7 wird der Teilluftstrom 6 dem Umluftstrom 5 gänzlich wieder zugeführt.

Bevorzugt werden - bezogen auf die eine Nachtrocknungskammer 2 insgesamt verlassende Luftmenge - zwischen 10 % und 90 % der Umluft 5 als Teilluftstrom 6 abgezweigt.

Weiters kann es beispielsweise sinnvoll sein, dass die dem Wärmetauscher 7 zugeführte Frischluftmenge derart gewählt wird, dass sie zumindest dem 2-fachen der dem Wärmetauscher 7 zugeführten Menge des Teilluftstromes 6 entspricht.

Bevorzugt wird die dem Wärmetauscher 7 zugeführte Frischluftmenge derart gewählt bzw. eingestellt, dass sie dem 2-fachen bis 20-fachen der dem Wärmetauscher 7 zugeführten Menge des Teilluftstromes 6 entspricht.

Die Strömungsgeschwindigkeiten, und damit die jeweiligen Luftmengen, welche in einem bestimmten Zeitintervall durch den Wärmetauscher 7 geleitet werden, können dabei in an sich bekannter Art und Weise in Abhängigkeit von Rohrquerschnitten, Rohrlängen etc. vor allem durch die Luftförder-Leistungen der Ventilationsvorrichtungen 4 gewählt bzw. eingestellt werden.

Dabei kann es zweckmäßig sein, wenn zum Einstellen der Strömungsgeschwindigkeit des durch den Wärmetauscher 7 geführten Teilluftstromes 6 zusätzlich zu den Ventilationsvorrichtungen 4 der Trocknungskammern 1, 2 zumindest ein zusätzlicher Abzugsventilator 14 vorgesehen ist.

Die Effizienz der Verfahrensführung hinsichtlich bestmöglicher Nutzung der in dem Teilluftstrom 6 enthaltenen, latenten Wärmeenergie kann weiter gesteigert werden, wenn die Ventilationsvorrichtungen 4, 14 zur Beeinflussung der Temperaturverhältnisse und Strömungsgeschwindigkeiten zwischen dem Frischluftstrom 8 und dem Teilluftstrom 6 durch den Wärmetauscher 7 drehzahlgeregelt werden. Dadurch wird erreicht, dass die Luftförder-Leistungen der vorhandenen Ventilationsvorrichtungen 4, 14 , und damit insbesondere die Strömungsgeschwindigkeiten der Luftströme in der gesamten Anlage, zum Beispiel in Abhängigkeit von an verschiedenen Punkten gemessenen Temperaturwerten, derart eingestellt werden können, dass eine bestmögliche Nutzung der in dem Teilluftstrom 6 inhärent enthaltenen Wärmeenergie möglich ist.

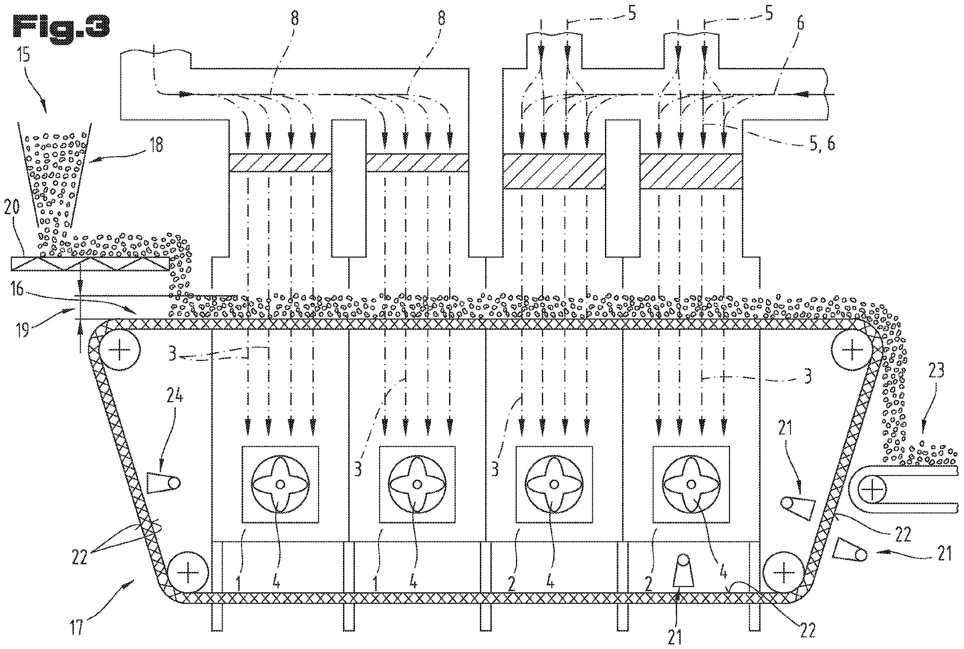

In der Fig. 3 ist eine weitere und gegebenenfalls für sich eigenständige Ausführungsform des Verfahrens zur Schüttguttrocknung gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

In Fig. 3 ist ausschnittsweise ein schematischer Längsschnitt durch eine Vorrichtung zur Schüttgut- bzw. Holztrocknung gezeigt. Bei dem gezeigten Ausführungsbeispiel wird das zu trocknende Schüttgut 15 mittels eines Förderbandes 16 einer Bandfördervorrichtung 17 zuerst durch zumindest eine Vortrocknungskammer 1 und nachfolgend durch zumindest eine Nachtrocknungskammern 2 gefördert. Wie aus Fig. 3 ersichtlich ist, bildet das Förderband 16 dabei eine zumindest annähernd horizontale Förderebene für das Schüttgut 15 aus.

Die Dosierung der auf das Förderband 16 aufzubringenden Menge an Schüttgut 15 pro Zeiteinheit kann dabei auf verschiedene Art und Weise erfolgen. So ist beispielsweise eine Zuführung des Schüttgutes 15 durch kontrollierte Berieselung des aktivierten Förderbandes 16 mit Schüttgut 15 via eine trichterförmige Aufgabevorrichtung 18 denkbar, wie dies in Fig. 3 angedeutet ist. Alternativ oder in Kombination dazu ist auch eine aktive Aufbringung des Schüttguts 15 via eine motorbetriebene Aufbringungsvorrichtung, zum Beispiel in Form einer Schnecke oder Doppelschnecke möglich.

Dabei kann es sinnvoll sein, derartige Aufbringvorrichtungen mengenregulierbar auszuführen, da unabhängig von Form und Art des Schüttguts 15 eine im zu trocknenden Schüttgut 15 enthaltene Wassermenge bezogen auf eine Einheitsmasse bzw. ein Einheitsgewicht des Schüttguts 15 schwanken kann. Durch diese verfahrenstechnische Maßnahme kann, wie anhand des in Fig. 3 gezeigten Ausführungsbeispiel ersichtlich ist, in Abhängigkeit vom initialen Wassergehalt des Schüttguts 15 und/oder in Abhängigkeit von der verfügbaren, externen Wärmeenergiemenge die Schüttguthöhe 19 auf dem Förderband 16 erhöht oder erniedrigt werden.

Weiters ist es zweckmäßig, die Schüttguthöhe 19 an die Art des zu trocknenden Schüttguts 15 anzupassen. Insbesondere ist die Stück- bzw. Korngröße des Schüttguts 15 hierfür ausschlaggebend. Für eine kleinere Stück- bzw. Korngröße des Schüttguts 15, wie zum Beispiel Sägespäne, kann die Schüttguthöhe 19 zweckmäßigerweise verringert werden, und für eine größere Stück- bzw. Korngröße, beispielsweise für Hackschnitzel oder dergleichen, kann die Schüttguthöhe 19 angehoben werden.

Um Schwankungen des Feuchtegehalts des Schüttguts 15 auch im kontinuierlichen Verfahrensablauf zumindest großteils kompensieren zu können, kann es weiters zweckmäßig sein, in Abhängigkeit vom initialen Wassergehalt des Schüttguts 15 die Fördergeschwindigkeit des Schüttguts 15 bzw. die Transportgeschwindigkeit des Förderbandes 16 zu erhöhen bzw. zu senken.

Alternativ oder in Kombination dazu können auch, wiederum in Abhängigkeit vom initialen Wassergehalt des Schüttguts 15, die Strömungsgeschwindigkeiten des aus der Umluft 5 abgeschiedenen Teilluftstromes 6 bzw. des Frischluftstroms 8 erhöht bzw. gesenkt werden, um beispielsweise höhere Trocknungsraten pro Zeiteinheit zu erzielen.

Um generell höhere Trocknungsraten pro Zeiteinheit in den Trocknungskammern 1, 2 vor allem für Holz in Schüttgutform zur erreichen, ist es zweckmäßig, den durch die jeweilige Kammer 1, 2 geführte Luftstrom 3 zumindest größtenteils durch das Förderband 16 zu leiten. Hierzu kann das in Fig. 4 gezeigte Förderband 16 beispielweise siebartig, feinmaschig oder durch sonstige Maßnahmen zumindest abschnittsweise luftdurchlässig ausgestaltet sein. Dadurch sind für den jeweiligen Luftstrom in der Trocknungskammer 1, 2 vordefinierte und gezielt präparierte Luftwege unmittelbar durch das Förderband 16 und daher auch durch das Schüttgut 15 vorhanden. In diesem Zusammenhang ist es weiters zweckmäßig, wenn die Breite des Förderbandes in etwa der Breite einer Trocknungskammer 1, 2 entspricht, da die Trocknungsluft 3 dadurch quasi zum Durchströmen des Förderbandes, und damit des Schüttguts 15 gezwungen wird.

In dem in Fig. 3 gezeigten Ausführungsbeispiel werden sowohl der Frischluftstrom 8 für eine Vortrocknungskammer 1 als auch die Umluft 5 sowie der Teilluftstrom 6 für eine Nachtrocknungskammer 2 jeweils von Ventilationsvorrichtungen 4 angesaugt und als Trocknungsluftströme 3 durch die jeweilige Kammer 1, 2 bzw. durch das Förderband 16 und Schüttgut 15 geführt. Die jeweiligen Rohrleitungen bzw. Luftkanäle für die Abluft 25, welche nach Hindurchführen durch eine Vortrocknungskammer 1 an die Umgebungsluft abgegeben wird - siehe Fig. 1 - sowie für die Umluft 5 um eine Nachtrocknungskammer 2 befinden sich auf der vom Betrachter abgewandten Seite der in Fig. 3 gezeigten Vorrichtung zur Schüttguttrocknung, und sind in Fig. 3 nicht gezeigt. Die an die Umgebung abgegebene Abluft 25 kommt dabei ausschließlich aus wenigstens einer Vortrocknungskammer 1, ist hochgradig gesättigt, und weist eine Temperatur von weniger als 25°C auf.

Insbesondere zur Steigerung der Trocknungsleistung bzw. Erhöhung der Trocknungsqualität kann es außerdem sinnvoll sein, eine Verteilungsvorrichtung 20 vorzusehen, mit welcher das Schüttgut 15 über die gesamte Breite des Förderbandes 16 möglichst gleichmäßig verteilt wird. Eine solche Verteilungsvorrichtung 20 kann beispielsweise durch eine begrenzt schwenkbare Verteilerschnecke realisiert werden.

In Abhängigkeit von der Art des zu trocknenden Schüttguts 15, insbesondere in Abhängigkeit von dessen Verschmutzungsgrad oder in Abhängigkeit von den darin enthaltenen Feinanteilen, kann zumindest eine Bandabblasungsvorrichtung 21 vorgesehen sein. Damit kann die Oberfläche 22 des Förderbandes 16 nach dem Passieren einer Abwurf- oder Austragungsvorrichtung 23 für das getrocknete Schüttgut 15 von etwaigen an dem Förderband 16 haftenden, festen oder flüssigen Resten des Schüttguts 15 befreit werden. Hierzu können eine oder mehrere Düsen, gegebenenfalls in unterschiedlichen Winkeln zu den Oberflächen 22 des Förderbandes 16 angeordnet sein, durch welche Düsen beispielsweise Druckluft mittels eines Kompressors in Richtung zu den Oberflächen 22 des Förderbandes 16 geblasen wird.

Weiters kann es hilfreich und/oder notwendig sein, die Oberflächen 22 des Förderbandes 16 nach dem Passieren der Abwurf- oder Austragungsvorrichtung 23 für das getrocknete Schüttgut 15 mittels einer Waschvorrichtung 24 zu reinigen bzw. waschen. Dabei wird unter Druck Wasser gegen eine Oberfläche 22 des Förderbandes 16 gesprüht bzw. gespritzt.

Die in Fig. 3 gezeigte Bandabblasungsvorrichtung 21 und/oder Waschvorrichtung 24 ist insbesondere bei Verwendung des beschriebenen, luftdurchlässigen Förderbandes 16 zweckmäßig, da hier eine erhöhte Wahrscheinlichkeit besteht, dass am Förderband 16 anhaftende Schüttgut- oder Schmutzreste die Luftdurchlässigkeit des Förderbandes 16 allmählich negativ beeinflussen. Bei Verwendung eines luftdurchlässigen Förderbandes 16 kann sowohl zumindest eine Bandabblasungsvorrichtung 21 als auch wenigstens eine Waschvorrichtung 24 angeordnet sein, welche auf grundsätzlich auf beide Oberflächen 22, des Förderbandes 16 gerichtet sein können, wie dies aus Fig. 3 ersichtlich ist.

Die Ausführungsbeispiele zeigen mögliche Ausführungsvarianten des Verfahrens zur Trocknung von Schüttgut 15 bzw. der Vorrichtung zur Schüttguttrocknung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8, 1, oder 5,5 bis 10.

Vor allem können die einzelnen in den Fig. 1 bis 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Trocknungsverfahrens dieses bzw. die zur Durchführung erforderlichen Komponenten teilweise unmaßstäblich und/oder vergrößert und/oder verkleinert dargestellt wurden.

### Bezugszeichenaufstellung

- 1: Vortrocknungskammer
- 2: Nachtrocknungskammer
- 3: Luftstrom
- 4: Ventilationsvorrichtung
- 5: Umluft
- 6: Teilluftstrom
- 7: Wärmetauscher
- 8: Frischluft
- 9: Kreuzstromwärmetauscher
- 10: Heizregister
- 11: Eintrittsseite
- 12: Eintrittsseite
- 13: Oberfläche
- 14: Abzugsventilator
- 15: Schüttgut
- 16: Förderband
- 17: Bandfördervorrichtung
- 18: Aufgabevorrichtung
- 19: Schüttguthöhe
- 20: Verteilungsvorrichtung
- 21: Bandabblasungsvorrichtung
- 22: Oberfläche
- 23: Austragungsvorrichtung
- 24: Waschvorrichtung
- 25: Abluft

## Patentansprüche

1. Verfahren zur Trocknung von Schüttgut (15), insbesondere zur Trocknung von rieselfähigem Holz in Form von Sägespänen oder Hackgut bzw. von Gär- und Klärrückständen, bei welchem das Schüttgut (15) nacheinander durch zumindest eine Vortrocknungskammer (1) und zumindest eine Nachtrocknungskammer (2) geführt wird, und den Kammern (1, 2) wenigstens eine Ventilationsvorrichtung (4) zugeordnet ist, wobei ein Luftstrom (3) zur Schüttguttrocknung in der zumindest einen Nachtrocknungskammer (2) eine im Kreislauf über ein Heizregister (10) geführte Umluft (5) umfasst, aus welcher Umluft (5) ein Teilluftstrom (6) abgezweigt und durch einen Wärmetauscher (7) geführt wird, und wobei ein Luftstrom (3) zur Schüttguttrocknung in der zumindest einen Vortrocknungskammer (1) aus einer über diesen Wärmetauscher (7) angesaugten und optional über ein Heizregister (10) zusätzlich erwärmten Frischluft (8) gebildet wird, **dadurch gekennzeichnet, dass** der abgezweigte Teilluftstrom (6) nach der Hindurchführung durch den Wärmetauscher (7) und einer durch Kondensation im Wärmetauscher (7) bewirkten Reduzierung der in diesem Teilluftstrom (6) enthaltenen Wassermenge, zur Gänze wieder in den Umluftstrom (5) der wenigstens einen Nachtrocknungskammer (2) zurückgeführt wird.

2. Verfahren nach Anspruch 1, **dadurch gekennzeichnet, dass** zumindest 20 % der Umluft (5) der wenigstens einen Nachtrocknungskammer (2) als Teilluftstrom (6) abgezweigt, und nach Hindurchführung durch den Wärmetauscher (7) wieder in den Umluftstrom (5) zurückgeführt wird.

3. Verfahren nach Anspruch 2, **dadurch gekennzeichnet, dass** die aus dem Umluftstrom (5) abgezweigte Menge an Teilluft (6) bezogen auf die aus der zumindest einen Nachtrocknungskammer (2) insgesamt austretende Luftmenge ausgewählt wird aus einem Bereich zwischen 20 % und 60 %.

4. Verfahren nach einem der vorhergehenden Ansprüche, **dadurch gekennzeichnet, dass** zum Einstellen der Luftmenge bzw. der Strömungsgeschwindigkeit des aus dem Umluftstrom (5) abgezweigten und durch den Wärmetauscher (7) geführten Teilluftstromes (6) zumindest ein zusätzlicher Abzugsventilator (14) vorgesehen ist.

5. Verfahren nach einem der vorhergehenden Ansprüche, **dadurch gekennzeichnet, dass** die Ventilationsvorrichtungen (4, 14) zur Beeinflussung der Temperaturverhältnisse und Strömungsgeschwindigkeiten bzw. Luftmengenverhältnisse zwischen dem Frischluftstrom (8) und dem Teilluftstrom (6) durch den Wärmetauscher (7) drehzahlgeregelt werden.

6. Verfahren nach einem der vorhergehenden Ansprüche, **dadurch gekennzeichnet, dass** in Abhängigkeit vom initialen Wassergehalt des Schüttguts (15) die Fördergeschwindigkeit des Schüttguts (15) erhöht bzw. erniedrigt wird.

7. Verfahren nach einem der vorhergehenden Ansprüche, **dadurch gekennzeichnet, dass** in Abhängigkeit vom initialen Wassergehalt des Schüttguts (15) die Strömungsgeschwindigkeiten des aus der Umluft (5) abgeschiedenen Teilluftstromes (6) bzw. des Frischluftstroms (8) erhöht bzw. erniedrigt werden.

8. Verfahren nach einem der vorhergehenden Ansprüche, **dadurch gekennzeichnet, dass** das Schüttgut (15) mittels eines Förderbandes (16) einer Bandfördervorrichtung (17) zuerst durch zumindest eine Vortrocknungskammer (1) und nachfolgend durch zumindest eine Nachtrocknungskammer (2) gefördert wird.

9. Verfahren nach Anspruch 8 **dadurch gekennzeichnet, dass** das Förderband (16) luftdurchlässig ausgebildet ist, sodass der durch die jeweilige Kammer (1, 2) geführte Luftstrom (3) zumindest größtenteils durch das Förderband (16) bzw. das Schüttgut (15) geleitet wird.

10. Verfahren nach Anspruch 8 oder 9, **dadurch gekennzeichnet, dass** eine Verteilungsvorrichtung (20) vorgesehen ist, mit welcher das Schüttgut (15) über die gesamte Breite des Förderbandes (16) möglichst gleichmäßig verteilt wird.

11. Verfahren nach einem der Ansprüche 8 bis 10, **dadurch gekennzeichnet, dass** in Abhängigkeit vom initialen Wassergehalt des Schüttguts (15) und/oder in Abhängigkeit von der verfügbaren, externen Wärmeenergiemenge die Schüttguthöhe (19) auf dem Förderband (16) erhöht oder erniedrigt wird.

12. Verfahren nach einem der Ansprüche 8 bis 11, **dadurch gekennzeichnet, dass** in Abhängigkeit von der Art des zu trocknenden Schüttguts (15), insbesondere in Abhängigkeit von dessen durchschnittlicher Korngröße, die Schüttguthöhe (19) erhöht oder erniedrigt wird.

13. Verfahren nach einem der Ansprüche 8 bis 12, **dadurch gekennzeichnet, dass** die Oberfläche (22) des Förderbandes (16) nach dem Passieren einer Abwurf- oder Austragungsvorrichtung (23) für das getrocknete Schüttgut (15) mittels zumindest einer Bandabblasungsvorrichtung (21) von an dem Förderband (16) haftenden, festen oder flüssigen Resten des Schüttguts (15) befreit wird.

14. Verfahren nach einem der Ansprüche 8 bis 13, **dadurch gekennzeichnet, dass** die Oberfläche (22) des Förderbandes (16) nach dem Passieren einer Abwurf- oder Austragungsvorrichtung (23) für das getrocknete Schüttgut (15) mittels einer Waschvorrichtung (24) gewaschen wird.

15. Verfahren nach einem der vorhergehenden Ansprüche, **dadurch gekennzeichnet, dass** die an die Umgebung abgegebene Abluft (25) ausschließlich aus wenigstens einer Vortrocknungskammer (1) kommt, hochgradig gesättigt ist und dabei eine Temperatur von weniger als 25°C aufweist.

## Claims

1. A method for drying bulk materials (15), particularly for drying pourable wood in the form of wood shavings or wood chips or for drying fermentation and clarification residues, wherein the bulk material (15) is successively conveyed through at least one pre-drying chamber (1) and at least one post-drying chamber (2) and at least one ventilation device (4) is assigned to the chambers (1, 2), wherein an air stream (3) for drying bulk material in the at least one post-drying chamber (2) comprises circulating air (5), which is circulated through a heating register (10), and a partial air stream (6) is branched off said circulating air (5) and conveyed through a heat exchanger (7), and wherein an air stream (3) for drying bulk material in the at least one pre-drying chamber (1) consists of fresh air (8), which is drawn in through this heat exchanger (7) and optionally heated further by means of a heating register (10), **characterized in that** the branched-off partial air stream (6) is once again entirely returned into the circulating air stream (5) of the at least one post-drying chamber (2) after it has passed through the heat exchanger (7) and the water content of this partial air stream (6) has been reduced due to condensation in the heat exchanger (7).

2. The method according to claim 1, **characterized in that** at least 20% of the circulating air (5) of the at least one post-drying chamber (2) are branched off in the form of a partial air stream (6) and once again returned into the circulating air stream (5) after passing through the heat exchanger (7).

3. The method according to claim 2, **characterized in that** the volume of partial air (6) branched off the circulating air stream (5) amounts to 20% to 60% referred to the overall air volume exiting the at least one post-drying chamber (2).

4. The method according to one of the preceding claims, **characterized in that** at least one additional extraction fan (14) is provided in order to adjust the air volume or the flow speed of the partial air stream (6), which is branched off the circulating air stream (5) and conveyed through the heat exchanger (7).

5. The method according to one of the preceding claims, **characterized in that** the speed of the ventilation devices (4, 14) for influencing the temperature ratios and the flow speeds or the air volume ratios between the fresh air stream (8) and the partial air stream (6) flowing through the heat exchanger (7) is controlled.

6. The method according to one of the preceding claims, **characterized in that** the conveying speed of the bulk material (15) is increased or decreased in dependence on the initial water content of the bulk material (15).

7. The method according to one of the preceding claims, **characterized in that** the flow speeds of the partial air stream (6) branched off the circulating air (5) and/or of the fresh air stream (8) are increased or decreased in dependence on the initial water content of the bulk material (15).

8. The method according to one of the preceding claims, **characterized in that** the bulk material (15) is initially conveyed through at least one pre-drying chamber (1) and subsequently through at least one post-drying chamber (2) by means of a conveyor belt (16) of a conveyor belt system (17).

9. The method according to claim 8, **characterized in that** the conveyor belt (16) is realized air-permeable such that at least the majority of the air stream (3) conveyed through the respective chamber (1, 2) flows through the conveyor belt (16) and the bulk material (15).

10. The method according to claim 8 or 9, **characterized in that** a distribution device (20) is provided, by means of which the bulk material (15) is distributed over the entire width of the conveyor belt (16) as uniformly as possible.

11. The method according to one of claims 8 to 10 **characterized in that** the bulk material height (19) on the conveyor belt (16) is increased or decreased in dependence on the initial water content of the bulk material (15) and/or in dependence on the available amount of external thermal energy.

12. The method according to one of claims 8 to 11 **characterized in that** the bulk material height (19) is increased or decreased in dependence on the type of bulk material (15) to be dried, particularly in dependence on its average grain size.

13. The method according to one of claims 8 to 12 **characterized in that** solid or liquid residues of the bulk material (15), which adhere to the conveyor belt (16), are removed from the surface (22) of the conveyor belt (16) after it passes a delivery or discharge device (23) for the dried bulk material (15) by means of at least one belt blow-off device (21).

14. The method according to one of claims 8 to 13 **characterized in that** the surface (22) of the conveyor belt (16) is washed by means of a washing device (24) after it passes a delivery or discharge device (23) for the dried bulk material (15).

15. The method according to one of the preceding claims, **characterized in that** the exhaust air (25) discharged into the surroundings originates exclusively from at least one pre-drying chamber (1), is highly saturated and has a temperature below 25°C.

## Revendications

1. Procédé de séchage de produit en vrac (15), plus particulièrement pour le séchage de bois fluide sous la forme de copeaux ou de matière broyée ou de digestats ou de résidus d'épuration, dans lequel le produit en vrac (15) est guidé successivement à travers au moins une chambre de pré-séchage (1) et au moins une chambre de post-séchage (2) et les chambres (1, 2) sont munies d'au moins un dispositif de ventilation (4), un flux d'air (3) pour le séchage du produit en vrac comprenant, dans l'au moins une chambre de post-séchage (2), une circulation d'air (5) guidée en circuit par l'intermédiaire d'un registre de chauffage (10), et à partir de cette circulation d'air (5), un flux d'air partiel (6) est dérivé et guidé à travers un échangeur thermique (7) et un flux d'air (3) pour le séchage du produit en vrac dans l'au moins une chambre de pré-séchage (1), d'un air frais (8) aspiré par l'intermédiaire de cet échangeur thermique (7) et en option chauffé de manière supplémentaire par l'intermédiaire d'un registre de chauffage (10), **caractérisé en ce que** le flux d'air partiel (6) dérivé est retourné, avec le passage à travers l'échangeur thermique (7) et une réduction de la quantité d'eau contenue dans ce flux d'air partiel (6), provoquée par une condensation dans l'échangeur thermique (7), dans son intégralité dans la circulation d'air (5) de l'au moins une chambre de post-séchage (2).

2. Procédé selon la revendication 1, **caractérisé en ce qu'**au moins 20 % de la circulation d'air (5) sont dérivés de l'au moins une chambre de post-séchage (2) sous la forme d'un flux d'air partiel (6) et sont retournés dans la circulation d'air (5) après avoir traversé l'échangeur thermique (7).

3. Procédé selon la revendication 2, **caractérisé en ce que** la quantité d'air partiel (6), dérivée à partir du flux d'air en circulation (5) est sélectionnée, par rapport à la quantité d'air totale sortant de l'au moins une chambre de post-séchage (2), dans un intervalle entre 20 % et 60 %.

4. Procédé selon l'une des revendications précédentes, **caractérisé en ce que**, pour le réglage de la quantité d'air ou de la vitesse d'écoulement du flux d'air partiel (6) dérivé du flux d'air en circulation (5) et guidé à travers l'échangeur thermique (7), au moins un ventilateur d'extraction (14) est prévu.

5. Procédé selon l'une des revendications précédentes, **caractérisé en ce que** les dispositifs de ventilation (4, 14) sont régulés en vitesse de rotation afin d'influencer les rapports de températures et les vitesses d'écoulement ou les rapports de quantités d'air entre le flux d'air frais (8) et le flux d'air partiel (6) à travers l'échangeur thermique (7).

6. Procédé selon l'une des revendications précédentes, **caractérisé en ce que** la vitesse de convoyage du produit en vrac (15) est augmentée ou diminuée en fonction de la teneur en eau initiale du produit en vrac (15).

7. Procédé selon l'une des revendications précédentes, **caractérisé en ce que** la vitesse d'écoulement du flux d'air partiel (6) dérivé de la circulation d'air (5) ou du flux d'air frais (8) est augmentée ou diminuée en fonction de la teneur en eau initiale du produit en vrac (15).

8. Procédé selon l'une des revendications précédentes, **caractérisé en ce que** le produit en vrac (15) est convoyé au moyen d'un convoyeur à bande (16) d'un dispositif de convoyage à bande (17), d'abord à travers au moins une chambre de pré-séchage (1) puis à travers au moins une chambre de post-séchage (2).

9. Procédé selon la revendication 8, **caractérisé en ce que** le convoyeur à bande (16) est conçu de façon à être perméable à l'air, de façon à ce que le flux d'air (3) guidé à travers la chambre correspondante (1, 2) est guidé au moins en majeure partie à travers le convoyeur à bande (16) ou le produit en vrac (15).

10. Procédé selon la revendication 8 ou 9, **caractérisé en ce qu'**un dispositif de répartition (20) est prévu, avec lequel le produit en vrac (15) est réparti le plus uniformément possible sur toute la largeur du convoyeur à bande (16).

11. Procédé selon l'une des revendications 8 à 10, **caractérisé en ce que** la hauteur du produit en vrac (19) sur le convoyeur à bande (16) est augmentée ou diminuée en fonction de la teneur en eau initiale du produit en vrac (15) et/ou en fonction de la quantité d'énergie thermique externe disponible.

12. Procédé selon l'une des revendications 8 à 11, **caractérisé en ce que** la hauteur du produit en vrac (19) est augmentée ou diminuée en fonction du type de produit en vrac (15) à sécher, plus particulièrement en fonction de sa taille de grain moyenne.

13. Procédé selon l'une des revendications 8 à 12, **caractérisé en ce que** la surface (22) du convoyeur à bande (16) est libérée, après le passage d'un dispositif d'éjection ou d'élimination (23) pour le produit en vrac (15) séché au moyen d'au moins un dispositif de soufflage de bande (21), des résidus solides ou liquides du produit en vrac (15) adhérant au convoyeur à bande (16).

14. Procédé selon l'une des revendications 8 à 13, **caractérisé en ce que** la surface (22) du convoyeur à bande (16) est lavée, après le passage d'un dispositif d'éjection ou d'élimination (23) pour le produit en vrac (15) séché au moyen d'un dispositif de lavage (24).

15. Procédé selon l'une des revendications précédentes, **caractérisé en ce que** l'air vicié (25) évacué vers l'environnement provient exclusivement d'au moins une chambre de pré-séchage (1), est fortement saturé et présente une température d'au moins 25 °C.
